(19) Europäisches Patentamt
European Patent Office
Office européen des brevets

(11) **EP 1 728 624 B1**

(12) **EUROPÄISCHE PATENTSCHRIFT**

(45) Veröffentlichungstag und Bekanntmachung des Hinweises auf die Patenterteilung:
**09.06.2010 Patentblatt 2010/23**

(51) Int Cl.:
**B32B 27/00** *(2006.01)*

(21) Anmeldenummer: **06007426.7**

(22) Anmeldetag: **07.04.2006**

(54) **Mehrschichtfolien mit optischen Spezialeffekten und Verfahren zu deren Herstellung**

Multilayered films with optical effects and process for their manufacture

Feuille multicouche avec des effets optiques et procédés de fabrication associé

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **01.06.2005 DE 102005025194**

(43) Veröffentlichungstag der Anmeldung:
**06.12.2006 Patentblatt 2006/49**

(73) Patentinhaber: **Profol Kunststoffe GmbH
83128 Halfing (DE)**

(72) Erfinder:
• **Maier, Konrad
83512 Wasserburg (DE)**

• **Stecher, Thomas
83071 Stephanskirchen (DE)**
• **von Grossmann, Ulrich
83313 Siegsdorf (DE)**

(74) Vertreter: **Schwabe - Sandmair - Marx
Patentanwälte
Stuntzstraße 16
81677 München (DE)**

(56) Entgegenhaltungen:
**DE-A1- 19 835 193    US-A- 5 473 032
US-A- 6 136 445**

**Beschreibung**

Die vorliegende Erfindung betrifft Mehrschichtfolien mit optischen Spezialeffekten und ein Verfahren zu deren Herstellung. Genauer betrifft die vorliegende Erfindung Mehrschichtfolien aus einer Farbschicht und einer Effektschicht, die mittels Koextrusion hergestellt werden.

Stand der Technik

Mehrschichtfolien können gestaltet werden, um eine Vielzahl an Farben und optischen Effekten aufzuweisen. Neben der einfachen Färbung einer Folie kann diese auch mit Effektpigmenten versehen werden. Durch den Einsatz von Effektpigmenten kann die Folie mit zusätzlichen optischen Effekten wie Glitzern oder Flitter versehen werden. Die Folien werden u. a. für die Gestaltung und zum Schutz von Gegenständen wie Kunststoff-, Holz- oder Metallbauteilen, Einrichtungsgegenständen und allgemein Oberflächen jeder Art verwendet. Hierzu wird die Folie auf den Gegenstand aufgebracht. Die dem Betrachter dann zugewandte Seite wird allgemein als "oben" liegend bezeichnet.

Neben der rein dekorativen Wirkung schützen die Mehrschichtfolien die Oberflächen außerdem vor Umwelteinflüssen wie Korrosion, Feuchtigkeit, UV-Bestrahlung oder sonstigen schädlichen Einflüssen.

Die US 6,136,445 betrifft eine Lackbeschichtung für eine Polymerfolienbahn und ein Verfahren das diese beschichteten Polymerfolienbahnen auf geschmolzene Körper aufbringt. Der Lack enthält einen Binder, ein Metallpigment, ein Farbpigment, organisches Lösungsmittel in Wasser, wobei der Binder eine Kombination von harten und flexiblen Harzen einschließt. Das Verhältnis dieser Harze ist so angepasst, dass das elastisch-plastische Verhalten der Lackbeschichtung an die der Polymerfolienbahn angepasst ist. Auf diese Weise kann die beschichtete Folienbahn deformiert werden ohne ein substanzielles Einreißen oder Aufbrechen der Beschichtung auf der Polymerfolienbahn zu verursachen.

Optische Spezialeffekte erhält man, wenn die Folie sowohl eine Grundfärbung als auch Effektpigmente aufweist und die Effektpigmente mit der Grundfarbe einen Kontrast bilden. Aus technischen Gründen sind beide Pigmentarten meist in separaten Schichten angeordnet.

Zum Herstellen einer derartigen Folie wird momentan entweder eine einfarbige Folie verwendet, die in einem zweiten Schritt mit Effektpigmenten bedruckt wird. In Abhängigkeit vom gewählten Druckverfahren bestehen bei dieser Methode in der Regel deutliche Einschränkungen sowohl hinsichtlich der Schichtdicken insbesondere der Farbschicht als auch hinsichtlich der Korngrößen der Effektpigmente.

Eine andere Möglichkeit ist das Laminieren von unterschiedlich eingefärbten Folien, um eine Mehrschichtfolie zu erhalten. Hierbei wird eine mit Effektpigmenten versehene Folie auf eine in der Grundfarbe eingefärbte Folie laminiert.

Beide Verfahren haben den Nachteil, dass mindestens zwei Verfahrensschritte zur Herstellung der Mehrschichtfolie benötigt werden. Die erhaltenen Mehrschichtfolien haben zudem die folgenden Nachteile. Bedruckte Folien erfordern eine ausreichende Haftung der aufzudruckenden Beschichtung auf der Farbschicht, was diese sowohl hinsichtlich der Materialien als auch hinsichtlich des Pigmentgehalts einschränkt. Bei Laminaten bestehen ebenfalls Einschränkungen hinsichtlich der Haftung der Schichten aneinander. Zudem lässt sich ein Abblättern der Laminatschicht bei der Weiterverarbeitung oder im Laufe der Zeit nur schwer verhindern.

Weiterhin bekannt sind Ausführungsformen, bei denen eine Effektschicht auf einen farbigen Gegenstand aufgezogen wird. Alternativ kann ein farbiger Kleber verwendet werden. In beiden Fällen wird nur eine einlagige Folie verwendet. Die Verwendung von farbigem Kleber ist sehr materialintensiv und verringert die Haftung. Die Aufbringung auf eine bereits farbige Oberfläche verringert wiederum den Gestaltungsspielraum.

Kurze Beschreibung der Erfindung

Diese und andere Nachteile des Standes der Technik werden von der vorliegenden Erfindung überwunden, indem eine Mehrschichtfolie bereitgestellt wird, umfassend

(A) mindestens eine Farbschicht, enthaltend ein oder mehrere Farbpigmente, eingebettet in eine Kunststoffmatrix, und
(B) mindestens eine Effektschicht, enthaltend ein oder mehrere Effektpigmente, eingebettet in eine Kunststoffmatrix, sowie
(C) wahlweise mindestens eine weitere Schicht,

wobei

- die Mehrschichtfolie einen Polyolefinanteil von mindestens 30 %, bezogen auf das Gesamtgewicht der Folie aufweist,
- die Effektpigmente eine durchschnittliche Korngröße von 5 bis 150 $\mu$m aufweisen,
- die Farbpigmente einen Kontrast zu den Effektpigmenten bilden und
- die Folie durch Koextrusion der mindestens einen Farbschicht und der mindestens einen Effektschicht erhalten wird.

Gleichzeitig betrifft die vorliegende Erfindung ein Verfahren zur Herstellung einer solchen Mehrschichtfolie, bei dem man die mindestens eine Farbschicht, enthaltend ein oder mehrere Farbpigmente, eingebettet in eine Kunststoffmatrix, und die mindestens eine Effektschicht, enthaltend ein oder mehrere Effektpigmente,

3 **EP 1 728 624 B1** 4

eingebettet in eine Kunststoffmatrix, sowie ggf. die mindestens eine weitere Schicht koextrudiert.

Durch die erfindungsgemäße Koextrusion der Schichten kann die Mehrschichtfolie zum Einen in nur einem Schritt hergestellt werden. Zum Anderen lässt sich eine optimale Haftung der Schichten auch bei hohen Pigmentgehalten erzielen.

_Genaue Beschreibung der Erfindung_

In einem ersten Aspekt betrifft die vorliegende Erfindung demnach eine Mehrschichtfolie, umfassend

(A) mindestens eine Farbschicht, enthaltend ein oder mehrere Farbpigmente eingebettet in eine Kunststoffmatrix, und
(B) mindestens eine Effektschicht, enthaltend ein oder mehrere Effektpigmente, eingebettet in eine Kunststoffmatrix,

wobei

- die Mehrschichtfolie einen Polyolefinanteil von mindestens 30 %, bezogen auf das Gesamtgewicht der Folie aufweist,
- die Effektpigmente eine durchschnittliche Korngröße von 5 bis 150 $\mu$m aufweisen,
- die Farbpigmente einen Kontrast zu den Effektpigmenten bilden und
- die Folie durch Koextrusion der mindestens einen Farbschicht und der mindestens einen Effektschicht erhalten wird.

Die Mehrschichtfolie kann daher minimal aus einer Farbschicht (A) und einer Effektschicht (B) bestehen. Diese sind dann ersichtlich nebeneinander bzw. benachbart angeordnet. Vorzugsweise umfasst die Folie mehr als eine Farbschicht und/oder mehr als eine Effektschicht. Diese können benachbart bzw. alternierend und/oder blockweise angeordnet sein. Beispielhafte Anordnungen sind von links nach rechts bzw. oben nach unten:

An Bm (blockweise)
Bm An (blockweise)
A1 B1 A2 B2 A3 B3 ... An Bm (alternierend)
B1 A1 B2 A2 B3 A3 ... Bm An (alternierend)
Ax By An-x Bm-y (blockweise alternierend)
By Ax Bm-y An-x (blockweise alternierend)

worin A eine Farbschicht und B eine Effektschicht ist, m und n natürliche Zahlen sind und der gewünschten Anzahl an Farb- bzw. Effektschichten entsprechen und worin x und y natürliche Zahlen zwischen 1 und n bzw. m sind ($1 \le x \le n$ und $1 \le y \le m$). Üblicherweise liegen n und m im Bereich von 1 bis 100, vorzugsweise 1 bis 10. m und n sind bevorzugt gleich, müssen dies aber nicht sein. Bevorzugt gilt $x \cong n/2$ und $y \cong m/2$.

In einer bevorzugten Ausführungsform umfasst die Mehrschichtfolie zusätzlich mindestens eine weitere Schicht (C). Diese kann ausgewählt sein unter mindestens einer Schutzschicht, mindestens einer Zwischenschicht und mindestens einer Unterschicht. Beispiele für derartige Schichten sind transparente Schutzschichten, Zwischenschichten z. B. zur Haftungsverbesserung oder transparent zur Erzeugung von Tiefeneffekten und trägernde bzw. haftende Unterschichten. Im Falle einer Schutzschicht ist diese vorzugsweise lichtdurchlässig, weist also einen hohen Transmissionsgrad auf. Sie ist vorzugsweise auch farblos, kann jedoch gefärbt sein. Beispielhafte Anordnungen für diese Schichten sind von links nach rechts bzw. oben nach unten

CABC
CBAC
CBCA
BCAC
CBCAC
CACACACBCBC
Ck An Cl Bm Cp
$C_1B_1C_2B_2... C_mB_m$ CAC

worin k, l, m, n und p natürliche Zahlen darstellen und der gewünschten Anzahl an zusätzlichen Schichten, Farb- bzw. Effektschichten entsprechen. Weitere Kombinationen alternierender und/oder blockweiser Anordnungen sind dem Fachmann ersichtlich. Üblicherweise liegen k, 1 und p im Bereich von 1 bis 100, stärker bevorzugt im Bereich von 1 bis 10. k, 1 und p sind unabhängig voneinander wählbar n und m sind wie oben definiert. Zudem können die einzelnen Schichten C gleich oder verschieden sein.

Bei der alternierenden Anordnung von Farbund Effektschicht(en) sollten die die Effektschichten trennenden Farbschichten einen deutlich reduzierten Farbanteil aufweisen, da sonst die Effektschicht von der Farbschicht abgedeckt wird und keine Lichteffekte mehr entstehen können. Werden die Effektschichten durch farblose Zwischenschichten oder farbarme Farbstoffschichten getrennt, entsteht eine bessere Tiefenwirkung.

Vorzugsweise sind die mindestens eine Farbschicht und die mindestens eine Effektschicht durch mindestens eine weitere Schicht getrennt. Stärker bevorzugt ist die Effektschicht über der Farbschicht angeordnet.

Aus Kostengründen wird die Dicke der Summe aller Effektschichten üblicherweise kleiner sein als die Dicke der Summe aller Farbschichten. Die Effektpigmente sind um ein vielfaches teurer als die Standardfarben. Technisch ist dies jedoch nicht zwingend.

Vorzugsweise steht die Dicke der Effektschicht(en) zur Dicke der Farbschicht(en) daher im Verhältnis von 100:1 bis 1:100, stärker bevorzugt 10:1 bis 1:10. Am. meisten bevorzugt beträgt das Verhältnis der Dicke der Effektschicht(en) zu derjenigen der Farbschicht(en) 1:1 - 1:10.

Die erfindungsgemäße Mehrschichtfolie kann eine Dicke zwischen 2 - 1000 $\mu$m, vorzugsweise 50 - 700

3

μm und besonders bevorzugt zwischen 100 - 500 μm aufweisen. Die Dicke der einzelnen Schichten liegt dementsprechend zwischen 0,01 bis 500 μm, vorzugsweise 1 bis 200 μm, am meisten bevorzugt 1-20 μm für die Effektschicht(en) und 80 -150 μm für die Farbschicht(en). Farbschichten sind üblicherweise dicker als Effektschichten.

Die erfindungsgemäße Mehrschichtfolie enthält Effektpigmente mit einer Korngröße von 5 bis 150 μm, vorzugsweise 50 bis 100 μm. Größere oder kleinere Korngrößen sind hinsichtlich der Koextrusion problematisch bzw. erzielen den gewünschten optischen Spezialeffekt nicht. Die Pigmente können jede beliebige Form wie Polyeder, Plättchen, Kügelchen, Stäbchen etc. aufweisen. Die Korngröße bezieht sich auf die jeweils größte Dimension der gewählten Form.

Die oder jede Effektschicht enthält mindestens 0,5 Gew.-%, vorzugsweise von 1 bis 15 Gew.-%, am meisten bevorzugt 1-5 Gew.-% Effektpigment, bezogen auf das Gesamtgewicht der Folie. Weiterhin enthält die oder jede Farbschicht mindestens 0,1 Gew.-%, vorzugsweise von 0,5 bis 30 Gew.-% Farbpigment, bezogen auf das Gesamtgewicht der Folie.

Der Gesamtgehalt an Effektpigment und Farbpigment übersteigt jedoch 70 Gew.-%, bezogen auf das Gesamtgewicht der Folie, nicht. Er beträgt vorzugsweise 0,6 bis 70 Gew.-%, stärker bevorzugt 2 bis 20 Gew.-%, bezogen auf das Gesamtgewicht der Folie. Die Gehalte der einzelnen Schichten addieren sich auf den gewünschten Gesamtgehalt auf. Sind weitere Füllstoffe enthalten, ist deren Menge im Pigmentgehalt enthalten. Unter Einbeziehung aller Füllstoffe wie Talkum, CaCO3, Mica, synthetischer und natürlicher Kieselsäure, Glaskugeln und Fasern beträgt der Anteil an Pigmenten/Füllstoffen somit maximal 70 Gew.-%, vorzugsweise 10-50 Gew.-%, bezogen auf das Gesamtgewicht der Folie.

Die Anteile der eingesetzten Farbpigmente sind ersichtlich abhängig vom gewünschten Deckungsvermögen der Folie. Der Gehalt an Filter bzw. Effektpigment richtet sich nach der gewünschten Wirkung. En hoher Flittergehalt deckt die Grundfarbe ab, optische Effekte werden dann hauptsächlich durch die unterschiedliche Lichtreflexion der eingebetteten Partikel erzeugt. Bei einem geringen Gehalt an Effektpigmenten überwiegt die Farbwirkung der Grundfarbe, die durch einzelne Lichtreflexe lebendiger wird. Mit zunehmender Dicke der Effektschicht bzw. bei Überlagerung von mehreren, durch transparente Schichten getrennte Effektschichten, kann eine räumliche Tiefe erzielt werden.

Bei deckenden Folien im Dickenbereich von 100-500 μm wird der Anteil an Farbpigmenten von 20 % bei Titandioxid weiß bis hin zu 1,5 % bei Ruß schwarz variieren. Der Anteil an Effektpigment in der Außenschicht ist wiederum abhängig von der Wirkung des eingesetzten Pigmentes. Ein Effektpigmentgehalt von 2-10 % wird aus Kostengründen üblicherweise kaum überschritten werden.

Die erfindungsgemäße Mehrschichtfolie enthält, über alle Schichten summiert, mindestens 30 Gew.-% Polyolefin. Dieses kann sein und ist vorzugsweise auf die Schichten verteilt. Dementsprechend umfasst die Matrix der Effektschicht bevorzugt ein Polyolefin. Besonders bevorzugt besteht diese Matrix aus Polyolefin. Ebenso umfasst die Matrix der Farbschicht bevorzugt ein Polyolefin und besteht bevorzugt aus Polyolefin. Die Matrices von Effekt- und Farbschicht können identisch sein, müssen dies aber nicht. Die Verwendung identischer Polymersysteme ist bevorzugt. Auch bei gleichem Polymersystem der einzelnen Schichten bestehen Außenschichten bevorzugt aus einem Polymer mit niedrigerer Viskosität und höherem MFR (Melt Flow Rate).

Neben dem Polyolefin kann die Mehrschichtfolie jedoch jegliche geeigneten Polymere als Bestandteil der Schichten und insbesondere der Kunststoffmatrices enthalten. Diese sind vorzugsweise weitgehend amorph, können aber auch teilkristallin vorliegen. Besonders bevorzugt sind Thermoplasten. Beispiele für Polymere, die in zum Herstellen der erfindungsgemäßen Mehrschichtfolie verwendet werden können, schließen Polyolefine, Vinylpolymere, Polyamide, Polyester, Polyacetale, Polycarbonat, Cellophan, Polyimide, Polysulfone, Polyurethane, thermoplastische Elastomere sowie Mischungen und Copolymere derselben ein. Als spezielle Beispiele sind zu nennen Polyester wie Polyethylenterephthalat (PET), Polybutylenterephthalat (PBT), Poly-(1,4-cyclohexandimethylenterephthalat) (PCDT), Polylactat und Poly-(4-hydroxybenzoesäure) oder Vinylpolymere wie Polyvinylchlorid (PVC), Polyvinylacetat und Polyvinylidenchlorid (PVDC). Für die Polyolefine sind insbesondere zu nennen Polyethylen, Polypropylen, Polybutylen, Polyisobutylen, Polystyrol, SBS (Styrol-Butadien-Styrol), Polytetrafluorethylen und Mischungen und Copolymere derselben. PE und PP sind bevorzugt (Homo- und Copolymere). Es kann sowohl HDPE (high density Polyethylen) als auch LLDPE (Low Density PolyEthylen) verwendet werden.

Der Anteil an Matrix für alle Schichten A, B und C richtet sich nach dem Pigmentgehalt und beträgt somit mindestens 30 Gew.-%, bezogen auf das Gewicht der Folie. Die nicht für die Farbwirkung verwendeten Schicht (en) können sämtliche geeignete und gewünschte Rohstoffe enthalten, die mit den obigen Rohstoffen der Grundmatrix koextrudiert werden können.

In der erfindungsgemäßen Mehrschichtfolie bilden die Farbpigmente einen Kontrast zu den Effektpigmenten. Unter einem Kontrast wird hierin verstanden, dass die Farb- und Effektpigmente hinsichtlich des Reflexionsgrades/Absorptionsgrades von Licht differieren. Mit Licht ist in dieser Anmeldung sichtbares Licht mit Wellenlängen im Bereich von ca. 300 bis 800 nm gemeint. Als Kontrast (K) wird im Rahmen dieser Erfindung die Differenz zwischen zwei Reflektionsgraden verstanden:

$$K = |R_1 - R_2|$$

Unter dem Reflektionsgrad (R) versteht man im Allgemeinen das Verhältnis:

$$R = I_r/I_e \times 100\ (\%)$$

wobei $I_e$ die Intensität des auf die Folie oder Schicht einfallenden Lichtes und $I_r$ die Intensität des davon reflektierten Lichts ist.

Der Kontrast zwischen beiden Pigmenten ist abhängig von der Wellenlänge. Damit ein Kontrast zwischen beiden Pigmenten im Sinne der Erfindung gegeben ist, muss dieser Kontrast bei mindestens einer Wellenlänge im Bereich des sichtbaren Lichts, wie oben definiert, > 5 %, vorzugsweise > 10 %, noch bevorzugter > 20 % sein.

Die Farbschicht ist vorzugsweise nicht oder nur im beschränkten Umfang lichtdurchlässig bzw. transparent. Ihr Transmissionsgrad sollte < 30 %, vorzugsweise < 20 %, noch bevorzugter < 10 % sein. Unter dem Transmissionsgrad (T) versteht man im Allgemeinen das Verhältnis:

$$T = I_a/I_e \times 100\ (\%)$$

wobei $I_e$ die Intensität des auf die Folie oder Schicht einfallenden Lichtes und $I_a$ die Intensität des austretenden Lichtes ist. Sind mehrere Farbschichten vorhanden und sind diese alternierend mit Effektschichten angeordnet, ist die Transmission der zwischen Effektschichten angeordneten Farbschicht(en) von 40 - 90 %, vorzugsweise 60 - 90 %.

Die Matrix der oder jeder Effektschicht ist im Gegensatz zu derjenigen der Farbschicht im Wesentlichen transparent. Ihr Transmissionsgrad beträgt vorzugsweise > 50 %, stärker bevorzugt > 70 %, noch stärker bevorzugt < 80 %. In der Folienbranche ist es üblich den Transmissionsgrad über eine relativ große Fläche zu bestimmen. Neben der Reflexion und Absorption der Pigmente muss auch die Reflexion der durch die Pigmente gestörten Polymermatrix einbezogen werden. Die Bestimmung erfolgt üblicherweise für jede Schicht einzeln, d.h. an einer 1-schichtigen Folie mit einem handelsüblichen Gerät nach Anweisungen des Herstellers (hier bspw. Farbmessgerät Minolta, Modell Spectra Magie CM 508d).

Grundsätzlich können alle geeigneten und dem Fachmann bekannten Effektpigmente verwendet werden. Effektpigmente im Sinne der Erfindung sind alle Pigmente, die neben einer wahlweise vorhandenen Färbung einen Weiteren optischen Effekt hervorbringen. Geeignete Effektpigmente sind z.B. Aluminiumplättchen, Interferenzpigmente, Flitter- oder Glimmer-Pigmente, Liquid Crystal Polymere, Fasern auf Basis von PA, CA oder PC mit Farbummantelung oder Glasperlen. Aluminiumplättchen erzeugen bei Ausrichtung parallel zur Oberfläche den sog. Metalleffekt (Änderung der Helligkeit bei Änderung des Betrachtungswinkels, auch Flip-Flop-Effekt genannt). Interferenzpigmente sind plättchenförmige Teilchen aus z.B. Glimmer, auf die sehr dünne Schichten aus Metalloxiden (z. B. Titandioxid oder Eisenoxid) aufgebracht werden. Je nach Dicke und Art der Metalloxidschicht bewirken diese Pigmentteilchen in Lackschichten durch Interferenz des einfallenden Lichts vielfältige Farbeffekte, die sich mit dem Betrachtungswinkel ändern. Ebenfalls geeignet sind Pigmente, die einen Glitzereffekt hervorrufen (Glitzereffektpigmente). Hierbei handelt es sich um Pigmente, die aus beliebigen, Licht stark reflektierenden Materialien bestehen. Glitzereffektpigmente können z.B. auf Glimmer basieren oder aus Calcium-Aluminium-Borsilikat-Plättchen bestehen. Glitzereffektpigmente können aber auch aus Metallpartikeln, wie z.B. aus Aluminium oder Gold bestehen. Vorzugsweise ist das mindestens eine Effektpigment ausgewählt aus der Gruppe, bestehend aus Aluminiumplättchen, Interferenzpigmenten, Flitter- oder Glimmer-Pigmenten, Liquid Crystal Polymere, Fasern auf Basis von PA, CA oder PC mit Farbummantelung oder Glasperlen und Mischungen derselben.

Grundsätzlich können alle geeigneten und dem Fachmann bekannten Farbpigmente verwendet werden, sofern ein Kontrast im obigen Sinne zum gewählten Effektpigment besteht. Damit kann der Farbschicht jede gewünschte Farbe verliehen werden, einschließlich aller Schwarz-, Weiß- und Grauschattierungen. Vorzugsweise ist das mindestens eine Farbpigment ausgewählt ist aus der Gruppe, bestehend aus organischen und anorganischen Pigmenten.

Für die organischen Pigmente sind beispielhaft zu nennen:

- Mono-Azopigmente z.B. Pigment Yellow 181 (PY 181)
- Dis-Azopigmente z.B. Pigment Orange 72 (PO 72)
- Isoindolin-Pigmente z.B. PY 139
- Kupfer Phtalocyanin-Pigmente PG 7, Pigment Blau 15 zu 1 (PB 15:1) - der Anhang :1 bzw. :2... bedeutet dass es sich um verlackte Pigmente handelt, z.B. Strontium verlackt, Barium verlackt oder Calcium verlackt.
- Quinarcidon-Pigmente z.B. PV 19, PR 122 oder
- Perylen-Pigmente z.B. PR 140

Für die anorgansichen Pigmente sind beispielhaft zu nennen

- Titandioxid-Pigmente z.B. PW 6
- Eisenoxid-Pigmente z.B. PR 101
- Chromoxid-Pigmente z.B. PG 17
- Bleichromat-Pigmente z.B. PR 104, PY 34
- Chrom-Nickel-Titan-Pigmente z.B. Pigment Brown 24 (PBR 24)
- Ultramarin-Pigmente z.B. PB 29
- Cobald-Pigmente z.B. PB 28 und

- Ruß

Weiter geeignete Pigmente sind dem Fachmann bekannt.

Die Farbschicht kann, um ihre geforderten optischen Eigenschaften zu erreichen, neben dem Farbpigment auch Farbstoffe (gelöst) oder Füllstoffe enthalten, die die Deckkraft erhöhen und den Transmissionsgrad verringern. In Frage kommen hierbei z.B. anorganische Substanzen wie Titandioxid (in Weiß-Pigmenten enthalten, als Nanopartikel aber auch als Füllstoff denkbar), hochdisperse Kieselsäure, Kaolin, Mica, Talkum, Zeolithe und Nanopartikel unterschiedlichster Herkunft.

Die Oberfläche der Folie kann, falls gewünscht, auf dem Fachmann bekannte Weise mit einer Oberflächenstruktur versehen sein. Vorzugsweise ist die Oberfläche z.B. geprägt. Gängige Verfahren sind die Schmelzprägung, Heißprägung der Folie und die Kaltprägung.

Schließlich kann die wie oben beschriebene Mehrschichtfolie zusätzlich in mindestens einer ihrer Schichten übliche Additive und Füllstoffe enthalten. Diese sind vorzugsweise ausgewählt aus der Gruppe, bestehend aus Weißpigmenten, Flammhemmern, Schaumbremsern, Weichmachern, UV-Stabilisatoren, Antioxidantien, Verarbeitungsstabilisatoren, Witterungsstabilisatoren und Mischungen derselben.

Weichmacher sind im Allgemeinen Zusätze, die die Steifigkeit der Mehrschichtfolie oder ihrer einzelnen Schichten beeinflussen. Typische Weichmacher sind die Ester mehrbasiger Säuren, mit einwertigen Alkoholen. Hier sind insbesondere die Ester der Phthalsäure, wie z.B. Dioctylphthalat geeignet. Es können aber auch Polyester von Glykolen mit zweibasigen Säuren, wie z.B. Sebacinsäure verwendet werden. Sie finden hauptsächlich bei PVC Verwendung.

Verarbeitungsstabilisatoren sind im Allgemeinen Zusätze, die während der Verarbeitung Abbaureaktionen verhindern. Ein typisches Beispiel ist Diphenylthiohamstoff.

Witterungsstabilisatoren sind im Allgemeinen Zusätze, die die Mehrschichtfolie vor Witterungseinflüssen und Licht schützen. Typische Beispiele sind handelsübliche Barium-, Cadmium-, Zink- oder Zinn-Verbindungen, z.B. in Kombination mit UV-Absorbern wie Benzophenonderivaten, Ruß und Titandioxid.

Gleichzeitig betrifft die vorliegende Erfindung ein Verfahren zur Herstellung einer wie oben beschriebenen Mehrschichtfolie, bei dem man die mindestens eine Farbschicht, enthaltend ein oder mehrere Farbpigmente eingebettet in eine Kunststoffmatrix, und die mindestens eine Effektschicht, enthaltend ein oder mehrere Effektpigmente, eingebettet in eine Kunststoffmatrix, sowie ggf. die mindestens eine weitere Schicht koextrudiert.

Die Folie kann zusätzlich einer Oberflächenbehandlung unterworfen werden. Bei der Oberflächenbehandlung handelt es sich vorzugsweise um ein Prägen oder Embossieren.

Schließlich kann die Folie auf einen Träger oder eine Oberfläche aufgebracht werden. Hierzu ist die Mehrschichtfolie vorzugsweise mit einer haftenden oder auf das jeweilige Klebersystem abgestimmten Unterschicht versehen. Diese kann in üblicher Weise mit einer Schutzfolie aus z. B. Papier oder ähnlichem bedeckt sein, die vor der Anwendung entfernt wird. Oder die Unterschicht wird durch die entsprechende Temperaturen und/oder Hilfsstoffe aktiviert. In diesem Falle ist keine Abdeckung nötig. Die Klebefunktion kann auch durch eine Effektschicht oder eine Farbschicht erfüllt werden.

Unter Koextrusion versteht man ein Verfahren, bei dem mehrere Kunststoffschichten in gleicher oder unterschiedlicher Schichtdicke übereinander zu einer einzigen Mehrschichtfolie extrudiert werden. Entsprechende Verfahren und hierzu geeignete Vorrichtungen sind dem Fachmann bekannt und müssen hier nicht beschrieben werden. Die konkreten Verfahrensparameter sind hierbei den gewählten Materialien, dem Feststoffanteil und den gewünschten Schichtenzahlen und -dicken anzupassen. Dies kann durch Routineexperimente optimiert werden.

Eine Möglichkeit der Coextrusion nutzt Laminaradapter. Die Prozessgrößen sind außerdem von dem jeweiligen Ausstoß bzw. der Anlagenleistung abhängig.

Eine bevorzugte Ausführungsform des erfindungsgemäßen Verfahrens wird im nachfolgenden Beispiel aufgeführt. Dieses soll die Erfindung lediglich veranschaulichen, jedoch in keiner Weise einschränken.

Beispiel

Der Standard Folienaufbau ist in I-II-III Struktur, wobei in diesem Fall die Schicht III Flitter als Effektpigment enthält, also die Dekorschicht bildet, in der Schicht II die Grundfarbe zudosiert wird und die Schicht I zum Verklebungszweck optimiert wurde. Die Schicht I ist also im fertigen Produkt nicht sichtbar.

Das Verhältnis von Innenschicht II zu Außenschichten I und III beträgt 4:1. Anders ausgedrückt, entspricht jede Außenschicht 10% der Gesamtdicke, bezogen auf den Schichtaufbau. In Bezug auf den Materialverbrauch haben die Außenschichten einen Anteil 22,5%. Ursache ist die prozessinterne Rückführung der Randstreifen in die Innenschicht. Die Randstreifen werden abgesaugt, in einer Mühle zerkleinert und als Schnitzel dem Materialstrom des Hauptextruders II beigemischt. Die Innenschicht enthält demnach prozessbedingt einen geringen Anteil an Material der Außenschichten.

Die Rohstoffe der einzelnen Schichten werden getrennt eingewogen und vermischt. Die Zusammensetzungen sind:

II:

| Extruder II | Gew.-% |
|---|---|
| PP-Block-Copolymer | 42,6 % |
| PP-Homopolymer | 42,6 % |
| Talkum MB | 12,7 % |
| Farb MB silber APX 114 | 2,1 % |
| Durchsatz: **343** kg | |

III:

| Extruder III | Gew.-% |
|---|---|
| PP-Homopolymer | 90 % |
| Flitter PP 792947/35 | 9,0 % |
| Fließhilfe | 1 % |
| Durchsatz: **43** kg | |

I:

| Extruder I | Gew.-% |
|---|---|
| PP-Block-Copolymer | 70,7 % |
| PP-Homopolymer | 23,6 % |
| Kreide MB | 4,7 % |
| Fließhilfe | 1 % |
| Durchsatz: **43** kg | |

Die Extrusion erfolgt mit für Polypropylen üblichen Prozesstemperaturen. Die Coextrusionsschichten wurden in diesem Fall in einem handelsüblichen Laminaradapter zusammengeführt.

Prozessdaten:

Gesamtdurchsatz 429 kg/h, Außenschichten I und III jeweils 43 kg/h.
Foliendicke 120 μm, Außenschichten jeweils 12 μm. (Für eine weitere Verstärkung des Effektes kann die Außenschicht mit dem Flitter dicker gefahren werden.)

Extruder I:

Schmelzetemperatur: 230°C
Drücke: vor Filter 130 bar, nach Filter 75 bar (Filterfeinheit 100 μm)

Extruder II:

Schmelzetemperatur: 253°C
Drücke: vor Filter 150 bar, nach Filter 80 bar (Filterfeinheit 100 μm) nach Pumpe 70 bar

Extruder III: 230°C

Drücke: vor Filter 130 bar, nach Filter 75 bar (Filterfeinheit 100 μm)

Düsenbreite: 1860 mm

Abzugsgeschwindigkeit: 37,5 m/min

Die Folie wurde mittels Unterdruck (-20 mbar) auf einer Kühlwalze (= Chill Roll (CR)) fixiert. Eingesetzt wurde eine CR, die eine leicht genarbte Oberfläche erzeugt. Stärkere Oberflächenstrukturen können durch eine anschließende Prägung realisiert werden.
Im vorliegenden Fall wurde mit einer CR Temperatur von 40°C produziert, wobei die Wahl der CR-Temperatur die mechanischen Eigenschaften der Folie stärker beeinflusst als die optische Wirkung der Effektpigmente. Die Folie wurde auf beiden Seiten mittels herkömmlicher Corona Stationen vorbehandelt. Damit wird ein größtmögliches Anwendungsspektrum abgedeckt. Zur Aufwicklung der Folie wurde die Spaltwickeltechnik gewählt. Der Wickelzug wurde mit zunehmender Rollenlauflänge reduziert.
Zum Vergleich wurde eine Folie ohne Flitter in der Zusammensetzung des Extrudes III erzeugt.
Die erhaltene erfindungsgemäße Folie hat eine Silberfärbung mit ausgeprägtem Flittereffekt. Bei identischer Prozessführung weist die mit Flitter in der Außenschicht gefahrene Folie einen niedrigen Glanz auf als die Folie mit transparenter Außenschicht (- 21 % gemessen unter 85 ° Winkel / DIN 67530). Dagegen zeigt die Farbmessung mit einem Farbmessgerät der Firma Minolta Typ Spectra Magic CM 508 d eine deutliche Verschiebung des Farbabstandes in der Helligkeit, d.h. Änderung nur im ΔL, keine Änderung in a (Achse grün/rot), b (Achse blau/gelb) und H (Farbton).

**Patentansprüche**

1. Verbundfolie, umfassend

(A) mindestens eine Farbschicht, enthaltend ein oder mehrere Farbpigmente, eingebettet in eine Kunststoffmatrix, und
(B) mindestens eine Effektschicht, enthaltend ein oder mehrere Effektpigmente, eingebettet in eine Kunststoffmatrix,

wobei

- die Verbundfolie einen Polyolefinanteil von mindestens 30 %, bezogen auf das Gesamtgewicht der Folie aufweist,
- die Effektpigmente eine durchschnittliche Korngröße von 5 bis 150 $\mu$m aufweisen,
- die Farbpigmente einen Kontrast zu den Effektpigmenten bilden und
- die Folie durch Koextrusion der mindestens einen Farbschicht und der mindestens einen Effektschicht erhalten wird.

2. Verbundfolie nach Anspruch 1, umfassend zusätzlich mindestens eine weitere Schicht, ausgewählt unter mindestens einer Schutzschicht, mindestens einer Zwischenschicht und mindestens einer Unterschicht.

3. Verbundfolie nach Anspruch 1 oder 2, worin die mindestens eine Farbschicht und die mindestens eine Effektschicht benachbart sind.

4. Verbundfolie nach Anspruch 2, worin die mindestens eine Farbschicht und die mindestens eine Effektschicht durch mindestens eine weitere Schicht getrennt sind.

5. Verbundfolie nach einem der vorstehenden Ansprüche, worin die Effektschicht über der Farbschicht angeordnet ist, vorzugsweise die oberste Schicht bildet.

6. Verbundfolie nach einem der vorstehenden Ansprüche, worin die Dicke der Effektschicht zur Dicke der Farbschicht im Verhältnis von 100:1 bis 1:100 steht.

7. Verbundfolie nach einem der vorstehenden Ansprüche, worin die oder jede Effektschicht mindestens 0,5 Gew.-%, vorzugsweise von 1 bis 5 Gew.-% Effektpigment enthält, bezogen auf das Gesamtgewicht der Folie.

8. Verbundfolie nach einem der vorstehenden Ansprüche, worin die oder jede Farbschicht mindestens 0,1 Gew.-%, vorzugsweise von 0,5 bis 30 Gew.-% Farbpigment enthält, bezogen auf das Gesamtgewicht der Folie.

9. Verbundfolie nach einem der vorstehenden Ansprüche, worin der Gesamtgehalt an Effektpigment und Farbpigment 70 Gew.-%, bezogen auf das Gesamtgewicht der Folie, nicht übersteigt und vorzugsweise 0,6 bis 70 Gew.-% beträgt, bezogen auf das Gesamtgewicht der Folie.

10. Verbundfolie nach einem der vorstehenden Ansprüche, worin die Effektschicht als Matrix ein Polyolefin umfasst, vorzugsweise aus Polyolefin besteht.

11. Verbundfolie nach einem der vorstehenden Ansprüche, worin die Farbschicht als Matrix ein Polyolefin umfasst, vorzugsweise aus Polyolefin besteht.

12. Verbundfolie nach einem der vorstehenden Ansprüche 9 oder 10, worin das Polyolefin ausgewählt ist aus der Gruppe, bestehend aus Polyethylen, Polypropylen, Polybutylen, Polyisobutylen, Polystyrol, Polytetrafluorethylen und Mischungen und Copolymeren derselben.

13. Verbundfolie nach einem der vorstehenden Ansprüche, worin die Farb- und Effektpigmente hinsichtlich des Reflexionsgrades/Absorptionsgrades differieren.

14. Verbundfolie nach einem der vorstehenden Ansprüche, worin die Matrix der oder jeder Effektschicht im Wesentlichen transparent ist.

15. Verbundfolie nach einem der vorstehenden Ansprüche, worin das mindestens eine Effektpigment ausgewählt ist aus der Gruppe, bestehend aus Aluminiumplättchen, Interferenzpigmenten, Flitter- oder Glimmer-Pigmenten, Liquid Crystal Polymere, Fasern auf Basis von PA, CA oder PC mit Farbummantelung oder Glasperlen und Mischungen derselben.

16. Verbundfolie nach einem der vorstehenden Ansprüche, worin das mindestens eine Farbpigment ausgewählt ist aus der Gruppe, bestehend aus organischen und anorganischen Pigmenten.

17. Verbundfolie nach einem der vorstehenden Ansprüche, worin die Oberfläche der Folie mit einer Oberflächenstruktur versehen und vorzugsweise geprägt ist.

18. Verbundfolie nach einem der vorstehenden Ansprüche, die zusätzlich in mindestens einer ihrer Schichten übliche Additive und Füllstoffe, vorzugsweise ausgewählt aus der Gruppe, bestehend aus Weißpigmenten, Flammhemmern, Schaumbremsem, Weichmachern, UV-Stabilisatoren, Antioxidantien, Witterungsstabilisatoren, Verarbeitungsstabilisatoren und Mischungen davon, enthält.

19. Verfahren zur Herstellung einer Verbundfolie nach einem der Ansprüche 1 bis 18, bei dem man die mindestens eine Farbschicht, enthaltend ein oder mehrere Farbpigmente, eingebettet in eine Kunststoffmatrix, und die mindestens eine Effektschicht, enthaltend ein oder mehrere Effektpigmente, eingebettet in eine Kunststoffmatrix, sowie ggf. die mindestens eine weitere Schicht koextrudiert.

20. Verfahren nach Anspruch 19, worin die Folie zusätzlich einer Oberflächenbehandlung unterworfen wird.

21. Verfahren nach Anspruch 19 oder 20, worin die Folie auf einen Träger oder eine Oberfläche aufgebracht wird.

**Claims**

1. Laminated foil, comprising

    (A) at least one coloured layer containing one or more colour pigments embedded in a plastic matrix, and
    (B) at least one effect layer containing one or more effect pigments embedded in a plastic matrix,

    and

    - the laminated foil contains a polyolefin proportion of at least 30 % by weight by reference to the total weight of the foil,
    - the effect pigments have an average grain size of 5 to 150 $\mu$m,
    - the colour pigments create a contrast with the effect pigments and
    - the foil is obtained by co-extruding the at least one coloured layer and the at least one effect layer.

2. Laminated foil as claimed in claim 1, comprising at least one other layer selected from at least one protective layer, at least one intermediate layer and at least one bottom layer.

3. Laminated foil as claimed in claim 1 or 2, in which the at least one coloured layer and the at least one effect layer are adjacent.

4. Laminated foil as claimed in claim 2, in which the at least one coloured layer and the at least one effect layer are separated by at least one other layer.

5. Laminated foil as claimed in one of the preceding claims, in which the effect layer is disposed above the coloured layer and preferably constitutes the uppermost layer.

6. Laminated foil as claimed in one of the preceding claims, in which the ratio of the thickness of the effect layer to the thickness of the coloured layer is 100:1 1 to 1:100.

7. Laminated foil as claimed in one of the preceding claims, in which the or each effect layer contains at least 0.5 % by weight, preferably 1 to 5 % by weight, of effect pigment by reference to the total weight of the foil.

8. Laminated foil as claimed in one of the preceding claims, in which the or each coloured layer contains at least 0.1 % by weight, preferably 0.5 to 30% by weight, of colour pigment by reference to the total weight of the foil.

9. Laminated foil as claimed in one of the preceding claims, in which the total content of effect pigment and colour pigment does not exceed 70 % by weight by reference to the total weight of the foil, and is preferably 0.6 to 70% by weight by reference to the total weight of the foil.

10. Laminated foil as claimed in one of the preceding claims, in which the effect layer contains polyolefin as a matrix, preferably is made from polyolefin.

11. Laminated foil as claimed in one of the preceding claims, in which the coloured layer contains a polyolefin as the matrix, preferably is made from polyolefin.

12. Laminated foil as claimed in one of claims 9 or 10 above, in which the polyolefin is selected from the group consisting of polyethylene, polypropylene, polybutylene, polyisobutylene, polystyrene, polytetrafluoroethylene and mixtures and copolymers thereof.

13. Laminated foil as claimed in one of the preceding claims, in which the colour and effect pigments differ in terms of their degree of reflection/ degree of absorption.

14. Laminated foil as claimed in one of the preceding claims, in which the matrix of the or each effect layer is essentially transparent.

15. Laminated foil as claimed in one of the preceding claims, in which the at least one effect pigment is selected from the group consisting of aluminium platelets, interference pigments, flitter or mica pigments, liquid crystal polymers, fibres with a base of PA, CA or PC with a colour coating or glass beads and mixtures thereof.

16. Laminated foil as claimed in one of the preceding claims, in which the at least one coloured pigment is selected from the group consisting of organic and inorganic pigments.

17. Laminated foil as claimed in one of the preceding claims, in which the surface of the foil is provided with a surface structure and is preferably embossed.

18. Laminated foil as claimed in one of the preceding claims, which contains standard additives and fillers in one of its layers, preferably selected from the group consisting of white pigments, flame retardants, foam inhibitors, softeners, UV stabilisers, antioxidants, stabilisers to combat the effects of weather, processing stabilisers and mixtures thereof.

19. Method of producing a laminated foil as claimed in one of claims 1 to 18, whereby the at least one coloured layer containing one or more colour pigments embedded in a plastic matrix and the at least one effect layer containing one or more effect pigments embedded in a plastic matrix, and optionally the at least one other layer, are coextruded.

20. Method as claimed in claim 19, whereby the foil is additionally subjected to a surface treatment.

21. Method as claimed in claim 19 or 20, whereby the foil is applied to a base or a surface.

**Revendications**

1. Feuille multicouche, comprenant

   (A) au moins une couche de couleur, contenant un ou plusieurs pigments colorés, enrobés dans une matrice de matière plastique, et
   (B) au moins une couche à effet, contenant un ou plusieurs pigments à effet, enrobés dans une matrice de matière plastique,

   où

   - la feuille multicouche présente une teneur en polyoléfines d'au moins 30 %, rapportée au poids total de la feuille,
   - les pigments à effet présentent une granulométrie moyenne de 5 à 150 $\mu$m,
   - les pigments colorés forment un contraste avec les pigments à effet et
   - la feuille est obtenue par coextrusion de l'au moins une couche de couleur et de l'au moins une couche à effet.

2. Feuille multicouche suivant la revendication 1, comprenant en outre au moins une couche supplémentaire, sélectionnée parmi au moins une couche de protection, au moins une couche intermédiaire et au moins une couche inférieure.

3. Feuille multicouche suivant la revendication 1 ou 2, dans laquelle l'au moins une couche de couleur et l'au moins une couche à effet sont adjacentes.

4. Feuille multicouche suivant la revendication 2, dans laquelle l'au moins une couche de couleur et l'au moins une couche à effet sont séparées par au moins une couche supplémentaire.

5. Feuille multicouche suivant l'une des revendications précédentes, dans laquelle la couche à effet est disposée au-dessus de la couche de couleur et forme de préférence la couche supérieure.

6. Feuille multicouche suivant l'une des revendications précédentes, dans laquelle le rapport de l'épaisseur de la couche à effet sur l'épaisseur de la couche de couleur est de 100:1 à 1:100.

7. Feuille multicouche suivant l'une des revendications précédentes, dans laquelle la couche à effet ou chaque couche à effet contient au moins 0,5 % en poids, de préférence de 1 à 5 % en poids de pigments à effet, rapportés au poids total de la feuille.

8. Feuille multicouche suivant l'une des revendications précédentes, dans laquelle la couche de couleur ou chaque couche de couleur contient au moins 0,1 % en poids, de préférence de 0,5 à 30 % en poids de pigments colorés, rapportés au poids total de la feuille.

9. Feuille multicouche suivant l'une des revendications précédentes, dans laquelle la teneur totale en pigments à effet et pigments colorés ne dépasse pas 70 % en poids, rapportés au poids total de la feuille, et est de préférence de 0,6 à 70 % en poids, rapportés au poids total de la feuille.

10. Feuille multicouche suivant l'une des revendications précédentes, dans laquelle la couche à effet comprend une polyoléfine comme matrice, de préférence est constituée d'une polyoléfine.

11. Feuille multicouche suivant l'une des revendications précédentes, dans laquelle la couche de couleur comprend une polyoléfine comme matrice, de préférence est constituée d'une polyoléfine.

12. Feuille multicouche suivant l'une des revendications précédentes 9 ou 10, dans laquelle la polyoléfine est sélectionnée parmi le groupe constitué du polyéthylène, du polypropylène, du polybutylène, du polyisobutylène, du polystyrène, du polytétrafluoroéthylène et de mélanges et copolymères de ceux-ci.

13. Feuille multicouche suivant l'une des revendications précédentes, dans laquelle les pigments colorés et les pigments à effet sont différents du point de vue de la réflectivité/absorptivité.

14. Feuille multicouche suivant l'une des revendications précédentes, dans laquelle la matrice de la couche à effet ou de chaque couche à effet est essentiellement transparente.

15. Feuille multicouche suivant l'une des revendications précédentes, dans laquelle l'au moins un pigment à effet est sélectionné parmi le groupe constitué de plaquettes d'aluminium, de pigments à interférence, de pigments à paillettes ou mica, de polymères de cristaux liquides, de fibres à base de PA, CA ou PC avec un enrobage coloré ou de perles de verre et de mélanges de ceux-ci.

16. Feuille multicouche suivant l'une des revendications précédentes, dans laquelle l'au moins un pigment coloré est sélectionné parmi le groupe constitué des pigments organiques et inorganiques.

17. Feuille multicouche suivant l'une des revendications précédentes, dans laquelle la surface de la feuille est pourvue d'une structure de surface et est de préférence estampée.

18. Feuille multicouche suivant l'une des revendications précédentes qui contient en supplément dans au moins une de ses couches les additifs et matières de charge habituels, de préférence sélectionnés parmi le groupe constitué des pigments blancs, des inhibiteurs de flamme, des agents antimousses, des plastifiants, des stabilisateurs UV, des antioxydants, des stabilisateurs vis-à-vis des intempéries, des stabilisateurs de transformation et des mélanges de ceux-ci.

19. Procédé de fabrication d'une feuille multicouche suivant l'une des revendications 1 à 18, pour lequel on effectue la coextrusion de l'au moins une couche de couleur, contenant un ou plusieurs pigments colorés, enrobés dans une matrice de matière plastique, et l'au moins une couche à effet, contenant un ou plusieurs pigments à effet, enrobés dans une matrice de matière plastique, ainsi que le cas échéant l'au moins une couche supplémentaire.

20. Procédé suivant la revendication 19, dans lequel la feuille est en outre soumise à un traitement de surface.

21. Procédé suivant la revendication 19 ou 20, dans lequel la feuille est appliquée sur un support ou une surface.

**EP 1 728 624 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6136445 A